(19)

Europäisches
Patentamt
European
Patent Office
Office européen
des brevets

(11) **EP 4 564 268 A1**

(12) **EUROPEAN PATENT APPLICATION**

(43) Date of publication:
**04.06.2025 Bulletin 2025/23**

(21) Application number: **23213523.6**

(22) Date of filing: **30.11.2023**

(51) International Patent Classification (IPC):
*G06Q 20/40* (2012.01)    *H04L 9/40* (2022.01)

(52) Cooperative Patent Classification (CPC):
**G06Q 20/4016; H04L 63/1433**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Mastercard International Incorporated
Purchase NY 10577 (US)**

(72) Inventors:
• **MALEKI, Mehrdad
Maynooth (IE)**
• **CHAGAS, Bruno
Dublin (IE)**
• **FLINTER, Stephen Patrick
Dublin (IE)**

(74) Representative: **Murgitroyd & Company
165-169 Scotland Street
Glasgow G5 8PL (GB)**

(54) **METHOD & TOOL FOR ANALYSING A NETWORK OF INFORMATION**

(57)      A computer-implemented method for analysing a network of information comprising a plurality of interconnected nodes, the method comprising: accessing a graph dataset comprising graph data representative of a graph comprising a plurality of nodes and a plurality of edges connecting the nodes; determining initial risk parameters of the nodes of the graph; and updating risk parameters of one or more nodes of the graph based on the initial risk parameters of the nodes of the graph, the updated risk parameters representing a likelihood of the associated nodes being outlier nodes.

200

Figure 2

## Description

### FIELD OF THE INVENTION

The present disclosure relates to methods and tools for analysing a network of information. The present disclosure more particularly relates to analysing and detecting illicit activities in networks of transactional information. The present disclosure may find particular use in detecting illicit activities in cryptocurrency systems.

### BACKGROUND TO THE INVENTION

There are many examples of networked information in data processing. For example, in social networks, network nodes correspond with people and connections between nodes can represent relationships between friends and family. In financial networks, the affairs of payees and payers, or borrowers and lenders can be represented by account nodes interconnected by transactions between those nodes. Similarly in telephone or communications networks, nodes corresponding to telephone or e-mail accounts can be related by calls, messages or correspondence between those accounts. The network of connections around a node of a network can provide characteristic information about the node itself.

In cryptocurrency networks, such as the Bitcoin blockchain, transactions can be represented by nodes, and a flow of Bitcoins can be represented by edges. Thus, the cryptocurrency network can provide characteristics information about the different transactions present in the network.

Illicit parties, such as criminals and fraudsters, may utilise financial networks, such as cryptocurrency networks, to carry out illicit activities. These illicit activities may include money laundering, terrorist financing, and various forms of fraud.

The importance of detecting and tracing illicit funds or activities in the crypto space cannot be overstated, as it is crucial for maintaining the integrity, security, and overall legitimacy of this rapidly evolving financial ecosystem. These illicit activities may undermine public trust in the cryptocurrency system, thus stifling mainstream adoption.

An example existing method for tracing illicit funds based on network analysis is based on a centrality measure. For example, in eigenvector centrality or Katz centrality, nodes that are influential within the network may be identified. An address with a high eigenvector centrality may be connected to other high-scoring nodes that indicate potential significant sub-networks of illicit addresses. However, such methods, and similar methods, may suffer from drawbacks, including being computationally expensive. Furthermore, such methods or algorithms may be discrete. A discrete algorithm may require frequent updates, which may be computationally expensive.

The present disclosure has been devised to mitigate or overcome at least some of the above-mentioned problems.

### SUMMARY OF THE DISCLOSURE

In accordance with a first aspect of the present disclosure, there is provided a computer-implemented method for analysing a network of information comprising a plurality of interconnected nodes, the method comprising: accessing a graph dataset comprising graph data representative of a graph comprising a plurality of nodes and a plurality of edges connecting the nodes; determining initial risk parameters of the nodes of the graph; and updating risk parameters of one or more nodes of the graph based on the initial risk parameters of the nodes of the graph the updated risk parameters representing a likelihood of the associated nodes being outlier nodes.

One of the potential applications for the proposed method is in identifying and visualizing nodes exhibiting potentially fraudulent behaviour. For example, the proposed method of the disclosure may advantageously enable the detection of illicit activities, such as fraudulent activities, to a specific node (e.g., a wallet) of a graph representative of a network of transactions. The proposed method may advantageously find hidden patterns of, for example, money laundering that would otherwise be hidden. The proposed method requires a technical understanding of how the network of transactions (e.g., a block chain network) operates, for example how the nodes representing transactions communicate with other nodes.

In some embodiments, updating risk parameters of one or more nodes comprises generating and solving a diffusion problem representative of a diffusion of risk in the graph dataset. In this way, risk parameters of one or more nodes may be updated by solving a diffusion problem, the diffusion problem being solvable on conventional computer hardware. Whilst a diffusion problem based on a dense graph may be computationally expensive and infeasible, a diffusion problem based on a sparse graph may be less computationally expensive and feasible. Most networks of transactions may be sparse graphs and as such, may be feasible for solving on conventional computer hardware.

In some embodiments, a rate of change of the risk parameter is dependent on: a source node risk parameter; a difference between the source node risk parameter and a destination node risk parameter; and a magnitude of the edge connecting the source node to the destination node. Thus, risk parameters of one of or more nodes may be updated based on data that is easily accessible as part of the graph dataset.

In some embodiments, updating risk parameters of one or more nodes comprises: generating a risk parameter vector; generating a weighted degree for each node of the graph; generating a square matrix comprising the weighted degree for each node of the graph; generating a weight matrix comprising entries representative of a weighting of one node with respect to another; generating a diffusion problem; and solving the diffusion problem. Thus, risk parameters of one or more nodes may be updated easily using data present in the graph dataset, using data processing steps that are easily carried out by conventional computer hardware.

In some embodiments, the weighting of one node with respect to another is an amount of a transaction between a source node and a destination node. In this way, risk parameters of one or more nodes can be updated based on transaction amounts between nodes, and thus larger transactions have a larger influence on a change in risk parameter.

In some embodiments, the method further comprises identifying one or more outlier nodes based on the updated risk parameters. Outlier nodes may be considered as nodes that have an updated risk parameter that is indicative of activities outside of the normal or intended use of the particular network. For example, outlier nodes in a cryptographic network enable the identification of potentially fraudulent behaviour. Accordingly, the present method may advantageously provide a means for identifying potentially fraudulent behaviour, thus improving the safety and trustworthiness of a network.

In some embodiments, identifying the one or more outlier nodes comprises: identifying nodes having an updated risk parameter that meets a threshold risk parameter. In this way, outlier nodes may easily be identified.

In some embodiments, the method comprises: causing an automated action based on the identification of one or more outlier nodes. In some embodiments, the automated action comprises communicating the one or more outlier nodes to a third party. In this way, the third party, for example a legal authority, may be notified of outlier nodes that may be connected with fraudulent activity.

In some embodiments, said nodes correspond with cryptographic transactions and said edges correspond with a transaction amount. Said outlier nodes may enable the identification of potentially fraudulent behaviour. Thus, the present method may provide a means for analysing a cryptographic network of transactions, for example to identify one or more outlier nodes that may be associated with fraudulent or illicit behaviour.

In some embodiments, the initial risk parameters of the one or more nodes are determined based on data present in the graph dataset. Accordingly, the initial risk parameters may easily be extracted based on data present in the graph dataset, thus reducing a computational complexity required to update the graph.

In some embodiments, the initial risk parameters of the one or more nodes are determined by receiving an input assigning risk parameters to respective nodes. In this way, the proposed method may provide a means for a user to assign initial risk parameters to nodes, for example if the user has prior knowledge that one or more nodes are associated with fraudulent behaviour.

In some embodiments, the graph dataset is accessed by communicating with a third party computing system. Communication with the third party computing system may be via network. Thus, the present method may be executed on data that is easily accessible.

In some embodiments, the graph dataset is accessed by: generating the graph dataset based on transaction data; storing the graph dataset on a memory unit; and accessing the graph dataset.

In accordance with a second aspect of the present disclosure, there is provided a computer program product comprising computer readable instructions stored on a computer readable medium which when executed in a computing device are arranged to perform the steps of the method of the first aspect of the present disclosure.

In accordance with a third aspect of the present disclosure, there is provided a network analysis tool for analysing a network of information comprising a plurality of interconnected nodes, the tool being arranged to perform the steps of the method of the first aspect of the present disclosure.

It will be appreciated that any features described herein as being suitable for incorporation into one or more aspects or embodiments of the present disclosure are intended to be generalizable across any and all aspects and embodiments of the present disclosure. Other aspects of the present disclosure can be understood by those skilled in the art in light of the description, the claims, and the drawings of the present disclosure. The foregoing general description and the following detailed description are exemplary and explanatory only and are not restrictive of the claims.

## BRIEF DESCRIPTION OF THE DRAWINGS

One or more embodiments of the disclosure will now be described, by way of example only, with reference to the accompanying drawings, in which:

Figure 1 shows an example computer system for implementing the present invention;

Figure 2 illustrates a flow diagram of a computer-implemented method for analysing a network of information in accordance with a first aspect of the present disclosure;

Figure 3 shows an example graph represented by a graph dataset;

Figure 4 shows a pair of nodes of the graph;

Figure 5 shows an example sub-method of one of the steps of the method of Figure 2; and

Figure 6 shows a sub-graph of a graph comprising an outlier node and a plurality of normal nodes.

Note that the drawings are schematic and accompany the description, illustrating preferred and exemplary embodiments and not necessarily being drawn to scale.

## DETAILED DESCRIPTION

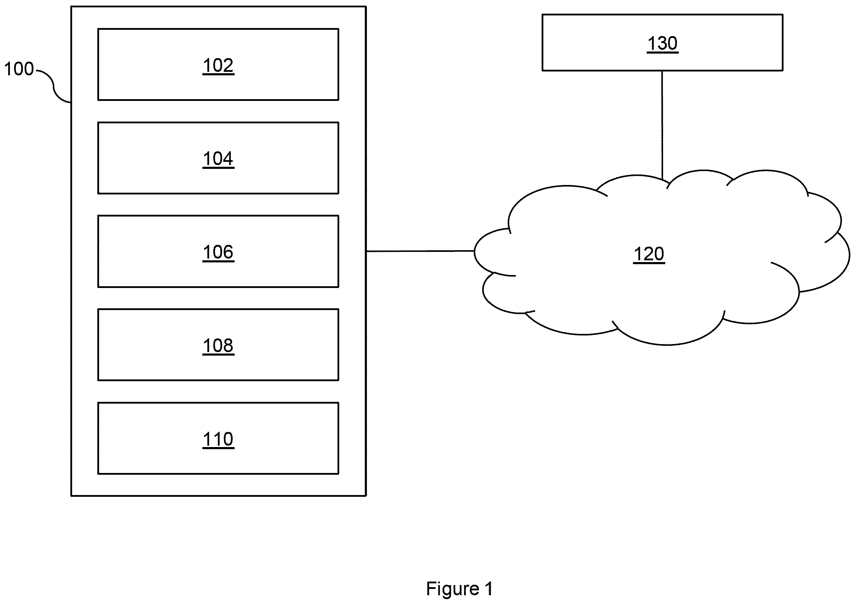

Figure 1 shows an example computer system 100 for implementing the present invention. One or more such computer systems 100 are arranged to perform or execute one or more steps of methods described herein. In particular, software running on one or more computer systems 100 perform one or more steps of the methods described herein.

The computer system 100 comprises a processing element 102, a memory unit 104, an input/output (I/O) interface 106, a communications interface 108, and a bus 110. Whilst Figure 1 illustrates a computer system 100 having particular components and in a particular arrangement, it can be envisaged that the computer system 100 comprises any suitable number of components in any suitable arrangement of components.

The processing element 102 is arranged to perform operations, such as arithmetical and logical operations, on data, for example data stored on the memory device 104. The processing element 102 is of any suitable construction for performing these operations. For example, the processing element 102 comprises one or more hardware components for performing these operations, such as processors, e.g. one or more central processing units (CPUs), accelerator processors, application specific processors and/or field programmable gate arrays (FPGAs), and other equipment such as Application Specific Integrated Circuits (ASICs). The processing element 102 performs operations including: fetching instructions associated with the methods disclosed herein from program memory, such as a RAM component of the memory device 104; decoding the instructions; and executing the instructions to carry out one or more steps of the methods described herein.

The memory unit 104 is arranged to communicate with the processing element 102, for example via the bus 110. The memory unit 104 comprises one or more hardware components, such as one or more primary memory units and one or more secondary memory units.

The one or more primary memory units, for example including a random access memory (RAM) unit, can temporarily store data for reading and writing purposes by the processing element 102. The primary memory may be any suitable RAM, and may comprise one or more RAM units. The present disclosure is not limited to a particular type of primary memory.

The one or more secondary memory units comprise memory, i.e. computer-readable storage in the form of a non-transitory computer-readable medium or media.

The memory may comprise one or more memory units employing one or more memory media, e.g. a magnetic medium such as a hard disk; an electronic medium such as a solid-state drive (SSD), flash memory or EEPROM; and/or an optical medium such as an optical disk drive. The secondary memory may be any suitable memory, and may comprise one or more secondary memory units. The present disclosure is not limited to a particular type of secondary memory.

The memory stores software comprising a respective instance of at least one client application arranged to run on the processing element 102 for carrying out various steps of the methods disclosed herein. The client application may be initially provided to the computer system 100 on suitable computer-readable storage medium or media, e.g. downloaded from a server, or provided on a removable storage device such as a removable SSD, flash memory key, removable EEPROM, removable magnetic disk drive, magnetic floppy disk or tape, optical disk such as a CD or DVD ROM, or a removable optical drive, etc.

The I/O interface 106 facilitates communication between the computer system 100 and one or more computer devices arranged to facilitate communication between a user and the computer system 100. For example, the one or more computer devices may include, but is not limited to including, a display device, a keyboard, a speaker, a printer, any other suitable device, or any combination of devices thereof.

The communication interface 108 facilitates communication between the computer system 100 and any other one or more computer systems and/or one or more networks. The communication interface 108 may comprise a network interface controller, network adapter, wireless NIC, or wireless adapter for communicating with a network. The computer system 100 may communicate with any network, such as the network 120, via the communication interface 108.

The network 120 may comprise an intranet, an extranet, a virtual private network (VPN), a local area network (LAN), a wireless LAN (WLAN), a wide area network (WAN), a wireless WAN (WWAN), a metropolitan area network (MAN), a portion of the Internet, a portion of the Public Switched Telephone Network (PSTN), a cellular telephone network, or any combination thereof. Any network 120 may be envisaged. The network 120 can facilitate communication between the computer system 100 and one or more third party computer system 130. It will be appreciated that the computer system 100 and the third party computer system 130 may be connected to each other directly, such that the network 120 is not needed.

Third party computing system 130 may be a network addressable computing system. Third party computing system 130 may generate, store, receive, and transmit data, such as, for example, a graph dataset, as will be discussed further herein. Communication with the third party computing system 130 may comprise the use of one or more application programming interfaces (APIs). One or more third party computing systems 130 may be present, and each of the one or more third party computing systems 130 may be associated with a respective third party.

Analysing a Network of Information

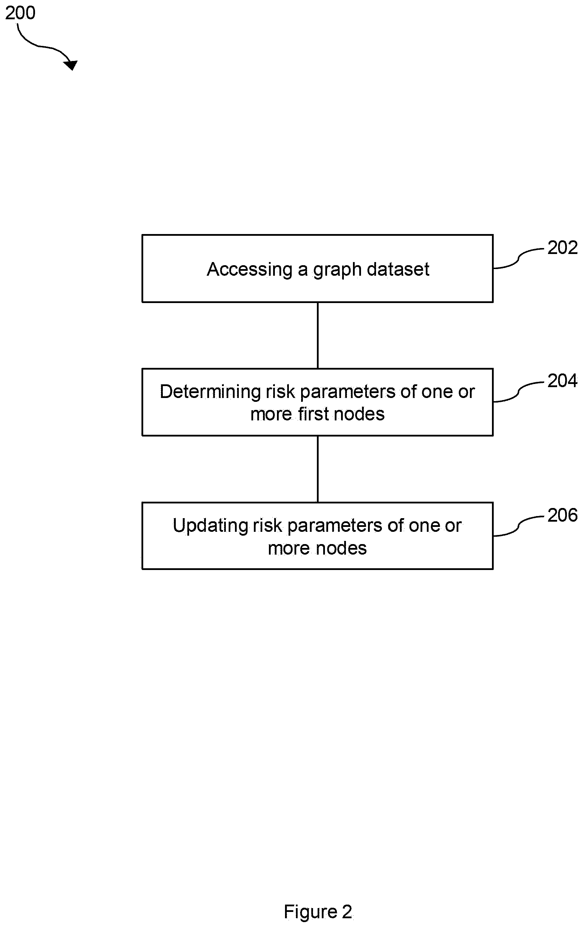

Figure 2 shows a flow diagram of a method 200 for analysing a network of information comprising a plurality of interconnected nodes, in accordance with a first aspect of the present disclosure.

The network of information in the present example is a cryptographic network of transactions and transaction amounts. The cryptographic network comprises one or more nodes associated with 'illicit' activities or entities. The term 'illicit' may be understood to mean activities performed by, or associated with, illicit parties, such as criminal or fraudsters. Such activities may include, but is not limited to including, money laundering, terrorist financing, and various forms of fraud.

The method 200 can be implemented by a computer system, such as the computer system 100 of Figure 1. For example, the processing element 102 may load instructions for carrying out one or more of the steps of the method 200 into the memory unit 104 for execution. Thus, the computer system 100 may be a tool for analysing a network of information.

Accessing a Graph Dataset

A first step 202 of the method 200 comprises accessing a graph dataset comprising graph data representative of a graph comprising a plurality of nodes and a plurality of edges connecting the nodes.

The graph dataset may be accessed by any suitable means. For example, the processing unit 102 may access the graph dataset by communicating with the third party computing system 130 via the network 120. In particular, the processing unit 102 can transmit an access request to the third party computing system 130, and the third party computing system 130 can transmit data comprising the graph dataset to the computer system 100. Alternatively, the graph dataset may be stored in the memory unit 104, for example as a consequence of the graph dataset being provided to the computer system 100 on suitable computer-readable storage medium or media, e.g. downloaded from a server, or provided on a removable storage device such as a removable SSD, flash memory key, removable EEPROM, removable magnetic disk drive, magnetic floppy disk or tape, optical disk such as a CD or DVD ROM, or a removable optical drive, etc. Alternatively, the graph dataset is be generated by the processing unit 102 based on transaction data, stored on the memory unit 104, and accessed by the processing unit 102 at a later time.

The graph dataset comprises graph data representative of a graph comprising a plurality of nodes and a plurality of edges connecting the nodes. A node represents an entity, and the edges represent some form of connection between the nodes. For example, in the context of a financial transaction graph representative of a network of transactions, a node may represent an account associated with an individual or other entity, and edges may represent transactions between each account. In the present example, a Bitcoin transaction graph may comprise nodes associated with Bitcoin addresses, and edges showing the flow of bitcoins between the Bitcoin addresses. It will be appreciated that the graph data set can represent any suitable type of graph, for example a graph comprising nodes corresponding with bank accounts and edges corresponding with transactions between said bank accounts.

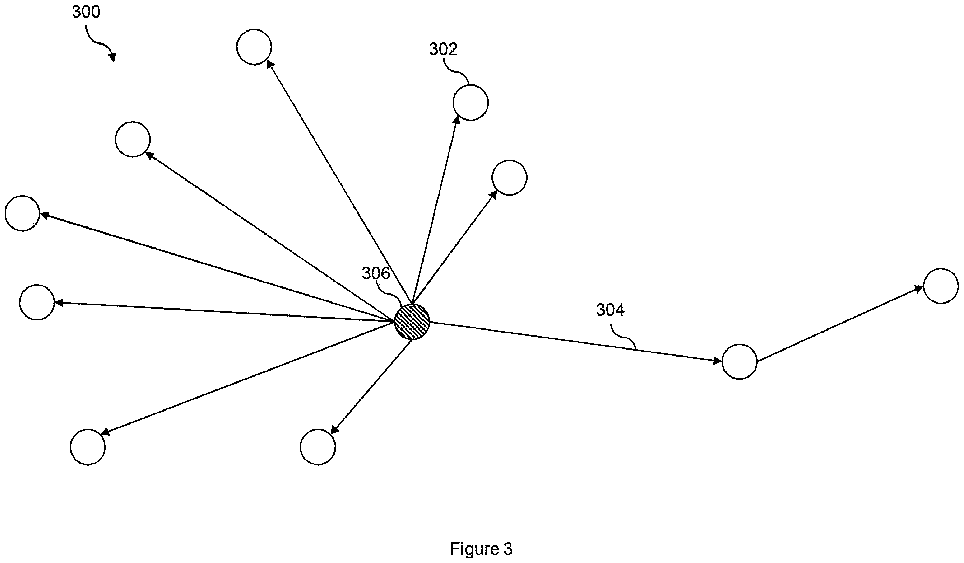

Figure 3 shows an example graph 300 represented by the graph dataset. The graph 300 is for illustration purposes, and in practice the graph dataset accessed in the present disclosure comprises any quantity of nodes and edges. The graph 300 of Figure 3 comprises a plurality of nodes 302, 306, and a plurality of edges 304 connecting the nodes 302, 306. The nodes 302, 306 represent entities, such as Bitcoin addresses, and the edges 304 represent a flow of data (e.g., a flow of bitcoins) between the Bitcoin addresses.

Each node is connected to one or more other nodes via respective edges. For example, in the example of Figure 3, the node labelled 302 is connected to the node labelled 306, and the node labelled 306 is connected to a plurality of other nodes.

The graph dataset further comprises data representative of a node identifier associated with each node. For example, where each node 302, 306 is associated with a respective Bitcoin address, the graph dataset comprises address ID data representative of a node identifier associated with each node 302, 306. The address ID may be a unique public identifier, generated by known means. The address ID may be a unique string of characters that was randomly generated at the point of creation of the wallet address. The address ID is thus useable as a means for uniquely identifying a node or entity. In some embodiments, the node identifier may be anonymised so as to protect the identity of the entity associated with the node.

The graph dataset further comprises data representative of an edge value associated with each node. For example, each edge 304 is associated with a particular transaction having a transaction amount (e.g., an amount of Bitcoin), and thus the graph dataset comprises transaction data representative of an edge value associated with each node edge 304.

The graph dataset may comprise data representative of a directionality of each of the one or more edges. For example, each edge 304 is associated with a particular direction data indicative of a flow of data, e.g., a transaction direction, from a first node to a second node. As shown in Figure 3, the directionality data is represented by an arrow showing the flow of a transaction from a first node to a second node. In Figure 3, wallet associated with the node 206 has transacted with the node 302, as indicated by the arrow direction.

The graph dataset further comprises additional data. The additional data comprises a contact number; an email address; a device ID; and an IP address associated with the nodes.

Determining Initial Risk Parameters

Step 204 of the method 200 comprises determining initial risk parameters of the nodes of the graph.

In an embodiment, the initial risk parameters of one or more nodes are determined based on data present in the graph dataset. For example, the graph dataset comprises predetermined risk data representative of a risk parameter associated with one or more nodes of the plurality of nodes, such that the initial risk parameters are easily be determined by reading the risk data in the risk dataset.

The initial risk parameters associated with the one or more nodes are determined based on a risk parameter label. At least one node is labelled as 'illicit'. One or more nodes may be labelled as 'licit', although this is not necessary. Remaining nodes are unlabelled or are labelled as 'unknown'.

The initial risk parameters associated with one or more nodes comprise a numerical value. The numerical value of the initial risk parameter is a real number between 0 and 1. A node labelled as 'illicit' is assigned an initial risk parameter of 0.99. A node labelled as 'licit' is assigned an initial risk parameter of 0.01. A node that is unlabelled or labelled as 'unknown' is assigned an initial risk parameter of 0.50. It will be understood that these choices are arbitrary, and that the nodes may be assigned any numerical value between 0 and 1, indicative of a likelihood that a node is an outlier node (e.g., that the node is 'illicit'). It will be appreciated that the numerical value is be limited to being between '0' and '1', and may be any suitable range of values. It will be further appreciated that the risk parameter may be of any suitable form for indicating whether (or how likely) one or more nodes are outlier nodes (e.g., 'illicit').

In an alternative embodiment, the initial risk parameters of the one or more nodes are determined by other means. For example, the initial risk parameters are determined based on data of the graph dataset, even if there is no predetermined risk data. As another example, the initial risk parameters of the one or more nodes are determined by receiving an input assigning initial risk parameters to respective nodes. For example, a user may input the initial risk parameters to the computer system 100 for use in step 204.

In terms of an initial risk parameter function:

$$I \times X^n \to [0,1]$$

Wherein I is the set of nodes, and $X^n$ is the Cartesian product of all features that contribute to the risk. For example, risk (2,'IP','contact_number','age') = 0.7 indicates that the risk of node 2 based on the IP address, contact number, and the age, is 0.7.

It may be determined that some nodes have no risk parameter, for example if the graph dataset comprises no risk data associated with these nodes. These nodes may be representative of transactions or entities that could be licit or illicit. These nodes are assigned any suitable initial risk parameter. For example, these nodes are assigned an initial risk parameter of 0.5.

Continuing with the example of Figure 3, at least one node 302, 306 comprises an associated initial risk parameter label. The initial risk parameter label is indicative of whether the node is associated with an illicit party. At least one node 306 is labelled as 'illicit' (and is assigned an initial risk parameter value of 0.99), and one or more nodes 302 are labelled as 'licit' (and are assigned an initial risk parameter value of 0.01). One or more nodes may be unlabelled (and are assigned an initial risk parameter value of 0.50).

Updating Risk Parameters

Step 206 of the method 200 comprises updating risk parameters of one or more nodes of the graph based on the initial risk parameters of the nodes of the graph.

Risk can propagate through a network, such as a network of transactions, according to the network topology and the amount (i.e., magnitude) of transactions.

The present disclosure proposes a diffusion problem on the network of transactions. More particularly, the step of updating risk parameters of one or more nodes comprises generating and solving a diffusion problem representative of a diffusion of risk in the graph corresponding to the network of transactions.

The risk (e.g., a magnitude of a risk parameter) associated with a node of the network of transactions propagates through the network of transactions according to the amount of transaction and topology of the network. A node having a greater risk parameter has a greater effect on a transfer of the risk when compared to a node having a lesser risk parameter. A difference between risk parameters of neighbouring nodes influences the propagation of risk. An amount of transaction (e.g., how much is transferred) also influences the propagation of risk.

In summary, a rate of change of the risk parameter is dependent on: a source node risk parameter (because nodes having a greater risk parameter have more effect on the transfer of risk to other nodes), a difference between the source node risk parameter and the destination node risk parameter; and a magnitude (e.g., amount of transaction) of the edge connecting the source node to the destination node.

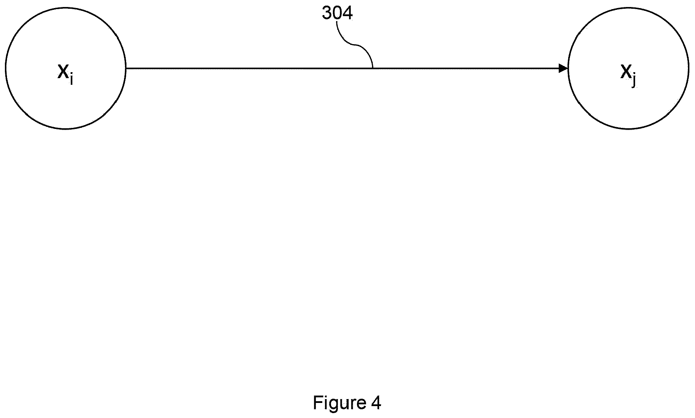

Referring to Figure 4, which shows an example pair of nodes connected by an edge 304, a source node

risk parameter $x_i$ of source node $i$, a difference between the source node risk parameter $x_i$ and a destination node risk parameter $x_j$ of destination node $j$, and a transaction amount $w_{i,j}$ determine the rate of change of the source node risk parameter $x_i$.

More particularly, the rate of change of the source node risk parameter $x_i$ is:

$$\frac{dx_i}{dt} = w_{ij} x_i (x_j - x_i)$$

Accordingly, the rate of change of the source node risk parameter $x_i$ is dependent on the destination node risk parameter $x_j$. If the source node $i$ is labelled as 'illicit' (thus has a risk parameter $x_i$ of 0.99), the destination node $j$ is labelled as 'illicit' (thus having a risk parameter $x_j$ of 0.99), the source node risk parameter $x_i$ will remain unchanged. If the source node $i$ is labelled as 'illicit' (thus has a risk parameter $x_i$ of 0.99), the destination node $j$ is labelled as 'licit' (thus having a risk parameter $x_j$ of 0.01), the source node risk parameter $x_i$ will reduce. If the source node $i$ is labelled as 'licit' (thus has a risk parameter $x_i$ of 0.01), the destination node $j$ is labelled as 'licit' (thus having a risk parameter $x_j$ of 0.01), the source node risk parameter $x_i$ will remain unchanged. If the source node $i$ is labelled as 'licit' (thus has a risk parameter $x_i$ of 0.01), the destination node $j$ is labelled as 'illicit' (thus having a risk parameter $x_j$ of 0.99), the source node risk parameter $x_i$ will increase.

Similarly, the rate of change of the destination node risk parameter $x_j$ is:

$$\frac{dx_j}{dt} = w_{ji} x_j (x_i - x_j)$$

It will be appreciated that the rate of change for the destination node $j$ and the source node $i$ can be modified such that only the destination node risk parameter $x_j$ changes.

It will be appreciated that Figure 4 is a simplified example, and that all neighbours of a node should be considered when updating the risk parameter. For example, the rate of change of the source node risk parameter $x_i$ when taking all neighbours into account is:

$$\frac{dx_i}{dt} = \sum_{j \in N(i)} w_{ij} x_i (x_j - x_i)$$

Wherein $N(i)$ is the set of all neighboring nodes to node $i$.

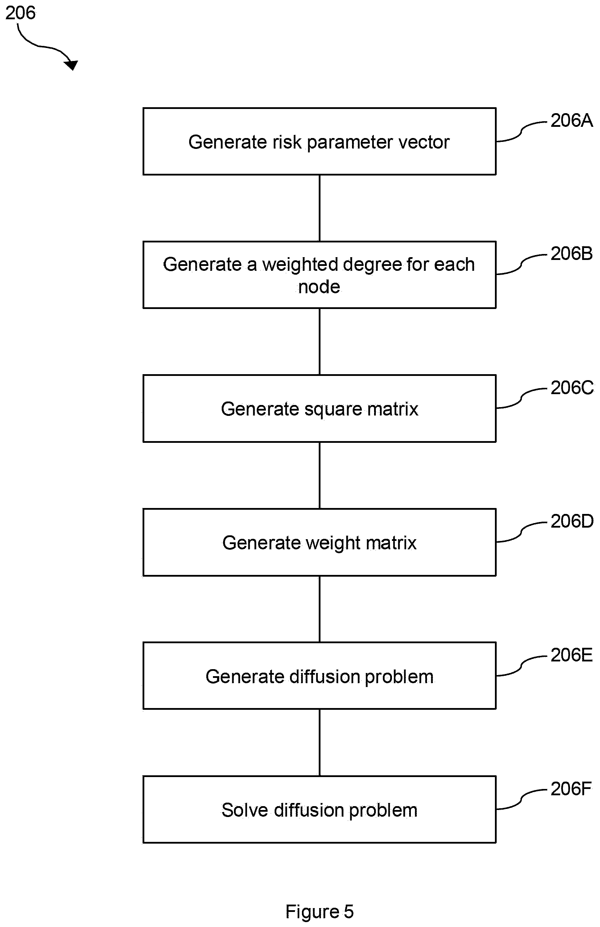

Figure 5 shows an example sub-method of step 206 of updating risk parameters of one or more nodes of the graph based on the risk parameters of the nodes. The sub-method 206 comprises generating a diffusion problem representative of a diffusion of risk in the graph. More particularly, the sub-method comprises generating a diffusion problem representative of a diffusion of risk in the transaction network.

First step 206A of the sub-method 206 comprises generating a risk parameter vector. The risk parameter vector is an n-dimensional vector $\vec{u}$ of risk parameters of all nodes in a network that can be defined as:

$$\vec{u} = \begin{pmatrix} x_1 \\ \vdots \\ x_n \end{pmatrix}$$

Wherein $x_i$ is a risk parameter of node $i$.

Second step 206B of the sub-method 206 comprises generating a weighted degree for each node of the graph. The weighted degree $s_i$ for each node is the total magnitude of transactions from node i to all other nodes in the transaction network. The weighted degree $s_i$ of node i is defined as:

$$s_i = \sum_{j \in N(i)} w_{ij}$$

Third step 206C of the sub-method 206 comprises generating a square matrix comprising the weighted degree for each node of the graph. The square matrix $S$ is an n by n matrix comprising the weighted degree of each node along its diagonal entries. More particularly, the square matrix $S$ is defined as:

$$S = diag(s_1, \dots, s_n)$$

Fourth step 206D of the sub-method 206 comprises generating a weight matrix comprising entries representative of a weighting of one node with respect to another. More particularly, the weight matrix $C$ comprises entries representative of an amount of a transaction between a source node $i$ and a destination node $j$. The weight matrix $C$ is defined as:

$$C = (w_{ij})$$

Wherein $w_{ii} = 0$ because a node does not influence itself.

Wherein $w_{ij} = 0$ if there is no edge between nodes $i$ and $j$ because a node doesn't influence a node that it is not connected to.

Fifth step 206E of the sub-method 206 comprises generating a diffusion problem. The diffusion problem is a diffusion equation in matrix form:

$$\frac{du}{dt} + S \vec{u} \odot \vec{u} - \vec{u} \odot C \vec{u} = 0$$

Wherein:

$$\overrightarrow{u_0} = u$$

Wherein $\overrightarrow{u_0}$ is the initial risk vector.

Wherein $\odot$ is the Hadamard product.

Finally, step 206F of the sub-method 206 comprises solving the diffusion problem. The problem presented in step 206E is a non-linear system of Ordinary Differential equations (ODE) having a unique solution that shows diffusion of the risk in a transaction network. The solution is an n-dimensional vector of risk parameters that have been updated.

Updating the nodes that are neighbours of neighbours in a discrete manner needs computationally expensive second order recursive equations. Using tools from ODE theory, the neighbours' up-to-degree k can be updated where k could be an integer greater than 2.

Identifying outlier nodes

Step 208 of the method 200 can comprise identifying one or more outlier nodes based on the updated risk parameters. Outlier nodes may be considered as nodes that have an updated risk parameter that is indicative of activities outside of the normal or intended use of the particular network. For example, outlier nodes in a cryptographic network enable the identification of potentially fraudulent behaviour.

The one or more outlier nodes may be identified as nodes associated with updated risk parameters that meet a risk parameter threshold. For example, where the risk parameters are restricted to values between 0 and 1, a risk parameter threshold may be 0.7, such that nodes having corresponding risk parameter values of 0.87 and above are determined to correspond to outlier nodes. Thus, an initially 'unlabelled' node (having an initial risk parameter of 0.5) could be updated to a risk parameter of 0.8. This step would thus identify said node as an outlier node.

The method 200 can further comprise causing an automated action based on the identification of an outlier node. For example, the automated action may include communicating the one or more identified illicit activities to a third party, such as a legal authority. For example, the automatic action may comprise sending node identifiers (e.g., address IDs) associated with illicit activity nodes of the graph to the third party via the network 120.

Example implementation on real data

The following is an example execution of the method 200 using real data.

At step 202, a graph dataset is accessed. The graph dataset is the 'Elliptic Data Set', which maps Bitcoin transactions to real entities belonging to licit categories (for example, exchanges, wallet providers, miners, licit services, and the like) versus illicit categories (for example, scams, malware, terrorist organizations, ransomware, Ponzi schemes, and the like).

The graph data set is an anonymized data set representative of a transaction network collected from the Bitcoin blockchain, comprising a plurality of nodes and a plurality of edges connecting the nodes. More particularly, the graph comprises 203,769 nodes and 234,355 edges.

A node in the graph represents a transaction, and an edge can be viewed as a flow of Bitcoins between one transaction and the other. Each node has been labelled as being created by a "licit", "illicit" or "unknown" entity. Two percent (4,545) of the nodes are labelled as illicit nodes. Twenty-one percent (42,019) of the nodes are labelled as licit nodes. The remaining transactions or nodes are not labelled with regard to licit versus illicit.

At step 204, the initial risk parameters of the nodes of the graph can be determined based on data present in the graph data set. In particular, the initial risk parameters are determined based on the labelling of the nodes as "licit" (assigned initial risk parameter of 0.01), "illicit" (assigned initial risk parameter of 0.99), or "unknown" (assigned initial risk parameter of 0.50).

At step 206, the risk parameters of one or more nodes of the graph are updated based on the initial risk parameters of the nodes of the graph. In particular, a diffusion problem is generated, the diffusion problem being representative of a diffusion of risk in the graph dataset. Even more particularly, the risk parameters are updated by: generating a risk parameter vector; generating a weighted degree for each node of the graph; generating a square matrix comprising the weighted degree for each node of the graph; generating a weight matrix comprising entries representative of a weighting (i.e., an amount of bitcoin) of one node with respect to another; generating a diffusion problem; and solving the diffusion problem.

Finally, at step 208, one or more outlier nodes are identified based on the updated risk parameters. These outlier nodes are identified as nodes that have an updated risk parameter that exceeds a risk parameter threshold. In the present example, the risk parameter threshold is 0.75.]

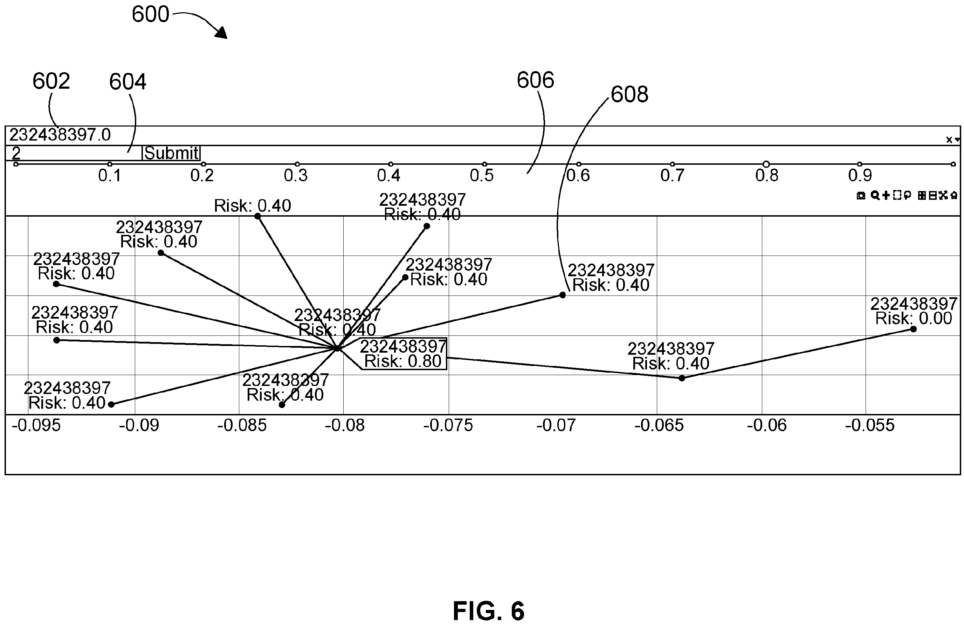

Figure 6 shows an example sub-graph of the graph dataset.

User Interface

Referring to Figure 6, embodiments of the inventions may utilise a user interface 600 for network analysis. The interface 600 includes a node selection field 602, and a depth input 604. The user interface 600 includes a view 606 of the topology of a selected node network or sub-network based on the inputs to the node selection field 602 and the depth input 604. The interface 600 further comprises risk parameter fields 608 that show the updated risk parameter of the respective nodes.

In the present example, and as shown in Figure 6, the node selection field 602 is configured to facilitate input of a node identifier (e.g., a wallet identifier (ID)), and the depth input 604 is configured to facilitate a sub-graph depth that is to be displayed. In the illustrated example, the wallet ID of the input node is 23243839, and the sub-graph depth is 2. Thus, the view 606 shows the input node associated with the wallet ID, and nodes that are connected to the input node up to a depth of 2. The view 606 also shows nodes IDs associated with the nodes that are connected to the input node.

Thus, the present tool may provide a means for a user to easily inspect a network of information to find out whether a node of the network is trustworthy. For example, if the user inputs a node identifier that they intend to interact with, they may find out a likelihood of that node being an outlier node. In the context of a cryptocurrency network, the user may intend to transact with a particular wallet. By inputting the wallet ID to the present tool, the user may determine a likelihood of that wallet being an illicit wallet.

Some embodiments may assign computer processing tasks to recipient processors, for example, but not limited to CPUs, GPUs, DSPs, GP-GPUs, quantum processor and/or processors optimised for artificial intelligence tasks. In such embodiments, the processors are the recipients and the processing tasks are the opportunities. In such embodiments, in for example, a complex cloud computing infrastructure, a large number of tasks, of differing types, requiring execution may be received and a large number of processors may be housed within the cloud computing infrastructure.

The description provided herein may be directed to specific implementations. It should be understood that the discussion provided herein is provided for the purpose of enabling a person with ordinary skill in the art to make and use any subject matter defined herein by the subject matter of the claims.

It should be intended that the subject matter of the claims not be limited to the implementations and illustrations provided herein, but include modified forms of those implementations including portions of implementations and combinations of elements of different implementations in accordance with the claims. It should be appreciated that in the development of any such implementation, as in any engineering or design project, numerous implementation-specific decisions should be made to achieve a developers' specific goals, such as compliance with system-related and business related constraints, which may vary from one implementation to another. Moreover, it should be appreciated that such a development effort may be complex and time consuming, but would nevertheless be a routine undertaking of design, fabrication, and manufacture for those of ordinary skill having benefit of this disclosure.

Reference has been made in detail to various implementations, examples of which are illustrated in the accompanying drawings and figures. In the detailed description, numerous specific details are set forth to provide a thorough understanding of the disclosure provided herein. However, the disclosure provided herein may be practiced without these specific details. In some other instances, well-known methods, procedures, components, circuits, and networks have not been described in detail so as not to unnecessarily obscure details of the embodiments.

It should also be understood that, although the terms first, second, etc. may be used herein to describe various elements, these elements should not be limited by these terms. These terms are only used to distinguish one element from another. For example, a first element could be termed a second element, and, similarly, a second element could be termed a first element. The first element and the second element are both elements, respectively, but they are not to be considered the same element.

The terminology used in the description of the disclosure provided herein is for the purpose of describing particular implementations and is not intended to limit the disclosure provided herein. As used in the description of the disclosure provided herein and appended claims, the singular forms "a," "an," and "the" are intended to include the plural forms as well, unless the context clearly indicates otherwise. The term "and/or" as used herein refers to and encompasses any and all possible combinations of one or more of the associated listed items. The terms "includes," "including," "comprises," and/or "comprising," when used in this specification, specify a presence of stated features, integers, steps, operations, elements, and/or components, but do not preclude the presence or addition of one or more other features, integers, steps, operations, elements, components and/or groups thereof.

As used herein, the term "if" may be construed to mean "when" or "upon" or "in response to determining" or "in response to detecting," depending on the context. Similarly, the phrase "if it is determined" or "if [a stated condition or event] is detected" may be construed to mean "upon determining" or "in response to determining" or "upon detecting [the stated condition or event]" or "in response to detecting [the stated condition or event]," depending on the context. The terms "up" and "down"; "upper" and "lower"; "upwardly" and "downwardly"; "below" and "above"; and other similar terms indicating relative positions above or below a given point or element may be used in connection with some implementations of various technologies described herein.

While the foregoing is directed to implementations of various techniques described herein, other and further implementations may be devised in accordance with the disclosure herein, which may be determined by the claims that follow. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

**Claims**

1. A computer-implemented method for analysing a network of information comprising a plurality of interconnected nodes, the method comprising:

   accessing a graph dataset comprising graph data representative of a graph comprising a plurality of nodes and a plurality of edges connecting the nodes;
   determining initial risk parameters of the nodes of the graph; and
   updating risk parameters of one or more nodes of the graph based on the initial risk parameters of the nodes of the graph, the updated risk parameters representing a likelihood of the associated nodes being outlier nodes.

2. The method of claim 1, wherein updating risk parameters of one or more nodes comprises generating and solving a diffusion problem representative of a diffusion of risk in the graph.

3. The method of claim 2, wherein a rate of change of the risk parameter is dependent on:

   a source node risk parameter;
   a difference between the source node risk parameter and a destination node risk parameter; and
   a magnitude of the edge connecting the source node to the destination node.

4. The method of any preceding claim, wherein updating risk parameters of one or more nodes comprises:

   generating a risk parameter vector;
   generating a weighted degree for each node of the graph;
   generating a square matrix comprising the weighted degree for each node of the graph;
   generating a weight matrix comprising entries representative of a weighting of one node with respect to another;
   generating a diffusion problem; and
   solving the diffusion problem.

5. The method of claim 4, wherein the weighting of one node with respect to another is an amount of a transaction between a source node and a destination node.

6. The method of any preceding claim, further comprising:

identifying one or more outlier nodes based on the updated risk parameters.

7. The method of claim 6, wherein identifying the one or more outlier nodes comprises:
   identifying nodes having an updated risk parameter that meets a threshold risk parameter.

8. The method of claim 6 or claim 7, further comprising:
   causing an automated action based on the identification of one or more outlier nodes.

9. The method of claim 8, wherein the automated action comprises communicating the one or more outlier nodes to a third party.

10. The method of any preceding claim, wherein said nodes correspond with cryptographic transactions and said edges correspond with a transaction amount.

11. The method of claim 10 when dependent on any of claims 6 to 9, wherein said outlier nodes enable the identification of potentially fraudulent behaviour.

12. The method of any preceding claim, wherein the initial risk parameters of the one or more nodes are determined based on data present in the graph dataset.

13. The method of any of claims 1 to 11, wherein the initial risk parameters of the one or more nodes are determined by receiving an input assigning risk parameters to respective nodes.

14. The method of any preceding claim, wherein the graph dataset is accessed by communicating with a third party computing system.

15. The method of any of claims 1 to 14, wherein the graph dataset is accessed by:

   generating the graph dataset based on transaction data;
   storing the graph dataset on a memory unit; and
   accessing the graph dataset.

16. A computer program product comprising computer readable instructions stored on a computer readable medium which when executed in a computing device are arranged to perform the steps of any previous claim.

17. A network analysis tool for analysing a network of information comprising a plurality of interconnected nodes, the tool being arranged to perform the steps of any of claims 1 to 15.

Figure 1

200

| Accessing a graph dataset | 202 |

| Determining risk parameters of one or more first nodes | 204 |

| Updating risk parameters of one or more nodes | 206 |

Figure 2

Figure 3

Figure 4

206

Generate risk parameter vector — 206A

Generate a weighted degree for each node — 206B

Generate square matrix — 206C

Generate weight matrix — 206D

Generate diffusion problem — 206E

Solve diffusion problem — 206F

Figure 5

FIG. 6

EP 4 564 268 A1

# EUROPEAN SEARCH REPORT

**Application Number**

EP 23 21 3523

Europäisches
Patentamt
European
Patent Office
Office européen
des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 107 730 262 A (ALIBABA GROUP HOLDING LTD) 23 February 2018 (2018-02-23) * the whole document * ----- | 1-17 | INV. G06Q20/40 H04L9/40 |
| X | US 2022/172211 A1 (MUTHUSWAMY SRINIVASAN S [IN] ET AL) 2 June 2022 (2022-06-02) * paragraph [0027] – paragraph [0068]; figures 1-4 * ----- | 1-17 | |

**TECHNICAL FIELDS SEARCHED (IPC)**

G06Q
H04L

The present search report has been drawn up for all claims

| Place of search | Date of completion of the search | Examiner |
|---|---|---|
| The Hague | 19 March 2024 | Raymaekers, Jens |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
    .....................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 21 3523

This annex lists the patent family members relating to the patent documents cited in the above-mentioned European search report.
The members are as contained in the European Patent Office EDP file on
The European Patent Office is in no way liable for these particulars which are merely given for the purpose of information.

19-03-2024

| Patent document cited in search report | | Publication date | Patent family member(s) | Publication date |
|---|---|---|---|---|
| CN 107730262 | A | 23-02-2018 | NONE | |
| US 2022172211 | A1 | 02-06-2022 | NONE | |

EPO FORM P0459

For more details about this annex : see Official Journal of the European Patent Office, No. 12/82